Europäisches Patentamt

European Patent Office

Office européen des brevets

(19)

(11) Numéro de publication: **0 044 039**

**B1**

(12) **FASCICULE DE BREVET EUROPEEN**

(45) Date de publication du fascicule du brevet: **23.10.85**

(21) Numéro de dépôt: **81105315.6**

(22) Date de dépôt: **09.07.81**

(51) Int. Cl.⁴: **G 06 K 19/06,** G 07 C 11/00

(54) **Objet portatif individualisé du genre carte de crédit.**

(30) Priorité: **11.07.80 FR 8015484**

(43) Date de publication de la demande:
**20.01.82 Bulletin 82/03**

(45) Mention de la délivrance du brevet:
**23.10.85 Bulletin 85/43**

(84) Etats contractants désignés:
**AT BE CH DE FR GB IT LI LU NL SE**

(56) Documents cités:
**DE-A-2 738 113**
**FR-A-2 311 360**
**FR-A-2 353 103**
**FR-A-2 471 000**
**US-A-3 906 460**

(73) Titulaire: **BULL TRANSAC**
**1, rue Ampère**
**F-91301 Massy (FR)**

(72) Inventeur: **Decavele, Dominique**
**Chemin de la Rousterie**
**F-78460 Chevreuse (FR)**

(74) Mandataire: **Weinmiller, Jürgen et al**
**Zeppelinstrasse 63**
**D-8000 München 80 (DE)**

Courier Press, Leamington Spa, England.

# Description

La présente invention concerne les objets portatifs individualisés du genre carte de crédit dont l'utilisation est conditionnée par la mise en oeuvre d'une combinaison d'autorisation et notamment ceux que comportent au moins une mémoire dans laquelle les résultats des tentatives d'utilisation sont enregistrées sous forme binaire permanente, ceci permettant en particulier d'invalider chaque objet ayant enregistré un nombre donné de tentatives échouées.

Dans un certain nombre d'applications, telle que celle évoquée ci-dessus, le fournisseur de l'objet accorde un certain nombre de possibilités identiques à celui auquel il remet l'objet; l'exploitation de chacune de ces possibilités se traduit par une modification permanente et souvent irréversible d'une des informations unitaires contenues dans l'objet.

Il est de l'intérêt individuel ou partagé du fournisseur de l'objet et de son détenteur que les informations mises en mémoire ne soient pas accessibles ou modifiables illicitement.

C'est pourquoi des dispositions sont prises pour interdire les modifications illicites des informations mémorisés dans l'objet et les prises frauduleuses de connaissance des informations normalement secrètes que contient chaque objet.

Dans un système connu décrit dans le document FR—A—2311360 les objets sont constitués par des cartes destinées à coopérer avec des lecteurs, l'utilisation d'une carte demande la connaissance d'un code qui l'identifie et on sait éliminer les tentatives de prise de connaissance du code par exploration des différents codes possibles. Ceci est obtenu en limitant le nombre d'essais successifs d'utilisation d'une carte par un même lecteur et par invalidation, par des lecteurs, des cartes ayant fait l'objet de plusieurs essais infructueux successifs.

Dans une variante connue, on mémorise les tentatives infructueuses sur chaque carte et la carte s'invalide à partir du moment où elle a enregistré un nombre de tentatives infructueuses. Cette solution présente l'inconvénient de ne pas faire de discrimination entre des tentatives erronées et des tentatives successives effectuées dans un but fraduleux, ce qui conduit à des invalidations non nécessaires. En effet s'il est nécessaire de détecter les manoeuvres fraduleuses, il est aussi souhaitable de ne pas pénaliser les détenteurs d'objets qui font une erreur par maladresse ou distraction.

Par contre un fraudeur peut tenter d'utiliser un dispositif permettant de prendre connaissance des information secrètes, détenues par l'utilisateur, au moyen de tests systématiques qui suppriment les signaux de mémorisation des tentatives infructueuses en les détectant suffisamment tôt avant qu'ils aient atteint le niveau nécessaire à la mémorisation.

Pour remédier à ces inconvénients, la présente invention propose donc un objet portatif individualisé du genre carte de crédit dont l'utilisation implique la mise en oeuvre d'un combinaison d'autorisation qui doit être fournie, à chaque utilisation, à un dispositif de sécurité apte à différencier la combinaison d'autorisation de toute autre combinaison de données binaires reçue pour permettre, tant que l'objet n'est pas invalidé, l'accès à une mémoire principale via un circuit d'enregistrement contrôlé par l'intermédiaire d'un circuit de détermination en fonction du contenu d'une mémoire annexe dans laquelle le circuit d'enregistrement inscrit, par modification irréversible de données binaires successives, les tentatives dites échouées réalisées à l'aide de combinaisons erronées de manière à invalider l'objet à partir d'un nombre donné de tentatives échouées, le circuit d'enregistrement comportant notamment un agencement logique pour commander les modifications de données, en mémoire principale et en mémoire annexe, en fonction des signaux fournis par le circuit de détermination et le dispositif de sécurité en sortie desquels cet agencement logique est relié.

Selon l'invention l'agencement logique est relié par deux liaisons au circuit de détermination dont il reçoit à chaque tentative, tour à tour, par l'une signal binaire caractéristique de l'échec de la tentative précédente, où par l'autre un signal binaire caractéristique de la réussite de la tentative précédente, il fournit en conséquence à chaque tentative, tant que l'objet n'est pas invalidé, un ordre de modificatuon de donnée en mémoire annexe pour la donnée qui suit la dernière donnée modifiée, si le dispositif de sécurité et le circuit de détermination indiquent par leurs signaux binaires respectifs les échecs de la présente et de la précédente tentatives, ou pour la donnée qui suit en second la dernière donnée modifiée, si alternativement le dispositif de sécurité indique la réussite de la présente tentative alors que le circuit de détermination indique l'échec de la précédente. Le circuit de détermination comporte un agencement de reconnaissance, à trois élément logiques relié à la mémoire annexe et apte à y détecter respectivement une succession ininterrompue d'au moins quatre données binaires modifiées, à l'aide du premier organe, une succession de deux données binaires modifiées et de deux données binaires non modifiées à l'aide du second organe et une succession d'une donnée binaire non modifiée, d'une donnée binaire modifiée et de deux données binaires non modifiées, à l'aide du troisième organe (18), pour fournir respectivement le signal binaire d'invalidation ou l'un des signaux binaires caractéristiques de l'échec ou de la réussite de la tentative précédente.

La présente invention prévoit également en variante un objet portatif individualisé du genre carte de crédit dont l'utilisation implique la mise en oeuvre d'une combinaison d'autorisation qui doit être fournie, à chaque utilisation, à un dispositif de sécurité apte à différencier la combinaison d'autorisation de toute autre combinaison de données binaires reçue pour permettre, tant que l'objet n'est pas invalidé, l'accès à une mémoire via un circuit d'enregistrement contrôlé par l'intermédiaire d'un circuit de détermination en fonction de données successivement mémorisées de manière irréversible et distinctive dans la mémoire au fur et à mesure des tentatives d'utilisation suivant la réussite ou l'échec de ses tentatives dues respectivement à l'emploi ou non de la bonne combinaison d'autorisation, le circuit d'enregistrement comportant notamment un agencement logique pour commander les modifications irréversibles des données mémorisées en fonction des signaux fournis par le circuit de détermination et le dispositif de sécurité en sortie desquels cet agencement logique est relié.

Selon cette variante le circuit de détermination comporte un registre dont le nombre d'étages est double du nombre de tentatives successives échouées entraînant l'invalidation de l'objet et qui est connecté en sortie de mémoire ainsi qu'un agencement de reconnaissance à deux organes logiques connectés sélectivement à des sorties parallèles des étages du registre et aptes à détecter respectivement une succession ininterrompue données binaires alternativement modifiées et non modifiées en nombre total égal à celui des étages du registre à l'aide du premier organe logique et une succession d'une donnée modifiée et de deux données non modifiées à l'aide du second organe logique.

L'invention sera décrite ci-après plus en détail à l'aide de deux exemples de réalisation et en relation avec des figures parmi lesquelles;

— La figure 1 présente un schéma des élément essentiels d'un ojet portatif individualisé selon l'invention,
— La figure 2 présente un premier exemple de réalisation des éléments présentés à la figure 1,
— la figure 3 présente une second réalisation des éléments présentés à la figure 1.

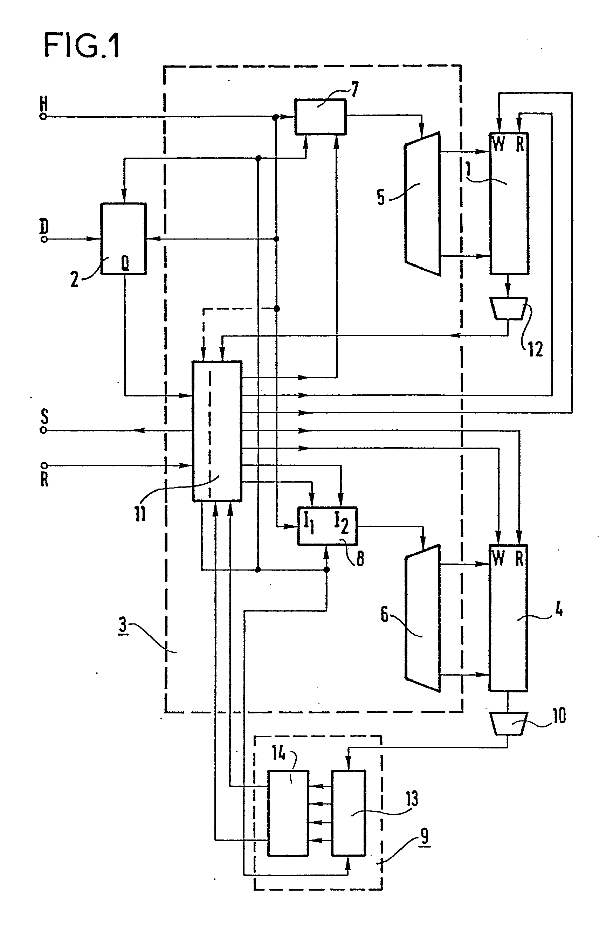

L'objet portatif individualisé présenté à la figure 1 est destiné à coopérer avec un terminal non présenté ici, en ce but il comporte un certain nombre d'accès tels que ceux référencés H, D, R sur cette figure 1.

Ces accés permettant l'alimentation en énergie de l'objet et l'échange de données entre cet objet et tout terminal auquel il peut se connecter. Les échanges peuvent classiquement s'effectuer par continuité électrique, par couplage électromagnétique ou par tout autre moyen analogue.

De manière classique, l'objet portatif individualisé se présente classiquement sous forme d'une carte, il comporte une mémoire 1 qui permet de conserver de manière permanente des informations sous forme de données binaires, celles-ci ne sont habituellement modifiables qu'une seule fois chacune en utilisation normale. De telles mémoires sont bien connues elles peuvent par exemple être réalisées sous forme inscriptible ou effaçable, éventuellement reprogrammable dans des conditions particulières; elles peuvent aussi être réalisées sous forme destructible à l'aide de composants intégrés ou discrets, tels des diodes ou des fusibles.

L'accès de la mémoire 1 à partir d'un terminal est contrôlé par un dispositif de sécurité 2 de structure classique qui est préférablement incorporé dans l'objet portatif individualisé. Le dispositif de sécurité 2 est sensible à une combinaison d'autorisation d'accès qui doit être fournie par l'utilisateur de l'objet à chaque utilisation, au moment de cette utilisation. Chaque combinaison fournie par l'utilisateur est transmise au dispositif de sécurité 2 qui la compare à la combinaison d'autorisation attribuée à l'objet et mémorisée dans celui-ci; le dispositif de sécurité 2 fournit un signal de reconnaissance ou de non reconnaissance de combinaison suivant le cas. De manière classique mais non exclusive, le terminal auquel est connecté l'objet, reçoit la combinaison générée par l'utilisateur par exemple à l'aide d'un clavier et il la transmet au dispositif de sécurité 2 de l'objet, via l'entrée de donnée D dans l'exemple présenté figure 1.

Les signaux de reconnaissance et de nonreconnaissance de combinaison sont transmis à des moyens d'enregistrement 3 qui contrôlent notamment l'accès à la mémoire 1 et le résultat de la comparison effectuée est transmis au terminal via une sortie de donnée S éventuellement confondue avec l'entrée D.

Dans l'exemple présenté figure 1 l'objet portatif individualisé comporte aussi une mémoire annexe de même type que la mémoire 1, cette mémoire annexe 4 permet de conserver une trace des tentatives d'accès à la mémoire dite principale 1 et en particulier une trace des tentatives qui ont échouées. En ce but, les moyens d'enregistrement 3 comportent des organes d'adressage 5 et 6 et sont reliés aux entrées de commande d'ecriture W et de lecture R de ces mémoires 1 et 4.

De manière classique les organes d'adressage 5 et 6 sont respectivement commandés par des agencements de sélection d'adresse 7 et 8 qui font partie des moyens d'enregistrement 3 et auxquels ils sont reliés.

L'objet contient aussi des moyens de détermination 9 qui sont reliés en sortie de la mémoire annexe 4 par l'intermédiaire d'un dispositif de lecture de mémoire 10, de manière à pouvoir déterminer si la ou les éventuelles précédentes tentatives d'accès à la mémoire principale on réussi ou échoué afin de détecter les tentatives de fraude par essais successifs de combinaisons différentes.

Les moyens d'enregistrement 3 contiennent aussi un agencement logique 11 qui est relié aux sorties des moyens de détermination 9 et du dispositif de sécurité 2 ainsi qu'aux agencements de sélection d'adresse 7 et 8 et aux entrées de commande en écriture W et en lecture R des mémoires 1 et 4.

Cet agencement logique 11 reçoit donc d'une part les signaux de reconnaissance et de non reconnaissance émis par le dispositif de sécurité 3 et d'autre part des signaux émis par les moyens de détermination 9, ces signaux étant respectivement caractéristiques des tentatives d'accès précédentes selon que ces tentatives ont respectivement échoué sans interruption au cours de plusieurs tentatives successives, ou réussi.

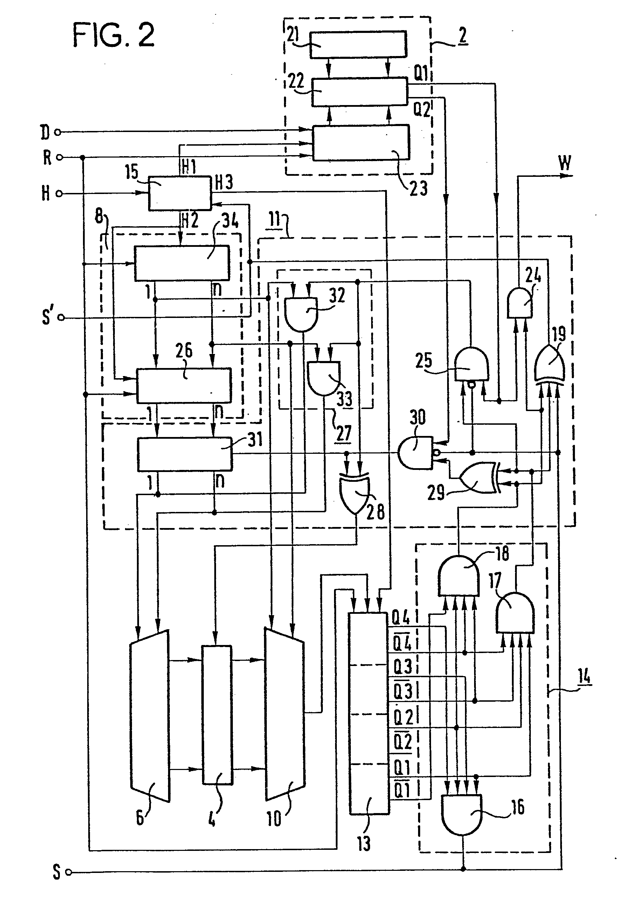

D'une manière qui sera précisée en relation avec la figure 2, les moyens de détermination 9 produisent une commande d'invalidation qui est transmise au terminal auquel est connecté l'objet via l'agencement logique 11 et l'accès S, lorsque le signal caractéristique de tentatives précédentes échouées en succession est produit. Ceci permet par exemple de signaler à l'utilisateur que l'objet n'est plus valide. L'agencement logique 11 produit une première commande d'écriture vers l'entrée W de la mémoire principale 1 lorsqu'il reçoit simultanément un signal de reconnaissance du dispositif de sécurité 2 et un signal caractéristique de tentative précédente d'accès réussie, en provenance des moyens de détermination 9. L'agencement logique 11 produit une seconde commande d'écriture vers l'entrée W de la mémoire annexe 4 et vers une entrée $I_1$ de l'agencement de sélection d'adresse 7 lorsqu'il reçoit un signal de reconnaissance et un signal caractéristique de tentative précédente échouée. L'agencement logique 11 produit une troisième commande d'écriture vers l'entrée W de la mémoire annexe 4 et vers une seconde entrée $I_2$ de l'agencement de sélection d'adresse 7 lorsqu'il reçoit un signal de non reconnaissance émis par le dispositif de sécurité 2.

Selon une première réalisation de l'invention, la première commande d'écriture modifie la donnée qui suit immédiatement la dernière donnée modifiée en mémoire principale 1, étant entendu que le dispositif de lecture 12 associé à la mémoire principale 1 permet de détecter la position de cette donnée modifiée en dernier et par conséquent d'adresser convenablement la donnée suivant par l'intermédiaire de l'agencement de sélection d'adresses 7 et de l'organe d'adressage 5.

La seconde commande d'écriture modifie la seconde donnée qui suit la dernière donnée modifiée dans la mémoire annexe 4, étant entendu que le dispositif de lecture 10 et l'unité de détermination 9 permettant de détecter la position de cette donnée modifiée en dernier et par conséquent d'adresser ladite seconde donnée par l'intermédiaire de l'agencement de sélection d'adresses 8 et de l'organe d'adressage 6.

La troisième commande d'écriture modifie la donnée qui suit la dernière donnée modifiée dans le mémoire annexe 4 par un processus analogue à celui évoqué ci-dessus.

De même la seconde donnée de la mémoire annexe 4 est modifiée d'origine par le constructeur préalablement à toute utilisation.

Les moyens de détermination 9 comportent un registre 13 relié en sortie du dispositif de lecture 10 et un agencement de reconnaissance 14 relié en sortie du registre 13. Dans l'exemple présenté figure 2 le registre 13 est du type à entrée série et sorties parallèles et il comporte quatre étages. L'entrée de données de ce registre est reliée à la sortie du dispositif de lecture 10 constitué par exemple par un multiplexeur dont les entrées de données sont respectivement reliées aux sorties des différents points de mémoire selon un arrangement classique; ce multiplexeur a ses entrées d'adresse reliées à l'agencement de sélection d'adresse constitué par exemple par un compteur binaire étagé 34 et il a son entrée d'interrogation (strobe) relié à l'entrée d'horloge H de l'objet via un circuit d'horloge 15 chargé d'assurer une répartition convenable des instants d'activation des différents organes et agencement de l'objet.

Le registre 13 est relié au circuit d'horloge 15 via une entrée d'horloge et les données binaires qu'il reçoit à son entrée de donnée sont transmises à travers ses quatre étages au rythme des signaux d'horloge H3.

Dans l'exemple présenté figure 2 chaque étage du registre 13 et muni de deux sorties complémentaires Q et $\overline{Q}$ qui alimentent l'agencement de reconnaissance 14 dont les trois organes logiques sont ici constitués par des portes ET 16, 17, 18 à quatre entrées chacune.

La porte 16 est reliée aux sorties des quatre étages du registre 13 de manière à détecter une succession de quatre données binaires modifiées, dans l'exemple présenté ceci est obtenu en reliant les sorties Q des étages du registre 13 aux entrées de la porte 16 qui produit donc un signal caractéristique de tentatives d'accès précédentes échouées en succession. Ce signal est de valeur un lorsque le registre 13 contient quatre données binaires de valeur un, il constitue un ordre d'invalidation qui dans l'exemple présenté est transmis à une entrée d'une porte OU exclusive 19 qui stoppe le compteur 34 via le circuit d'horloge 15 et interdit toute opération à l'aide de l'objet par l'intermédiaire de la sortie S.

La porte 17 est reliée aux sorties $Q_1$ et $Q_2$ des deux étages du registre 13 qui sont les plus éloignés de l'entrée et aux sorties complémentaires $\overline{Q}_3$ et $\overline{Q}_4$ des deux autres étages de manière à produire un signal binaire caractéristique de tentative d'accès précédente échouée de valeur un à détection d'une combinaison 0011 dans le registre 13, cette combinaison traduisant, par ses deux 0, qu'il existe des données binaires modifiables dans le mémoire annexe 4 et que la tentative d'accès précédente a échouée, par ses deux 1.

La porte 18 est reliée à la sortie $Q_2$ et aux sorties complémentaires $\overline{Q}_1$, $\overline{Q}_3$, $\overline{Q}_4$ de manière à produire un signal binaire caractéristique de tentative précédente réussie de valeur un à détection d'une combinaison 0010 dans le registre 13, cette combinaison indiquant qu'il existe des données binaires modifiables en mémoire annexe 4 par sa combinaison 00 et que la dernière tentative précédente n'a pas échoué par sa combinaison 10. Bien entendu, il est possible que plusieurs ou toutes les tentatives précédentes aient réussi puisque seules les tentatives échouées et chaque tentative réussie qui suit un échec sont inscrites en mémoire annexe.

De manière simple le compteur 34 de l'agencement de sélection d'adresse 8 adress successivement les différents points de mémoire annexe 4 dans lesquels sont contenues les données binaires; ceci s'effectue à chaque usage de l'objet, le compteur 34 étant déclenché par les impulsions d'horloge qu'il reçoit d'une horloge extérieure via l'entrée H de l'objet et le circuit d'horloge 15, et étant remis à zéro à chaque usage en fin d'opération via le circuit d'horloge 15. Dans l'exemple présenté les adresses successives sont transmises d'une part au multiplexeur 10 et d'autre part à l'organe l'adressage en écriture 6 de la mémoire annexe. Le registre 13 voit donc défiler toutes les données contenues en mémoire 4 jusqu'à apparition d'une des trois combinaisons mentionnées ci-dessus. A réception d'une de ces combinaisons le compteur 34 est arrêté via le circuit d'horloge 15 la porte OU exclusive 19 dont les trois entrées sont reliées aux sorties des portes 16, 17, 18; et le compteur conserve l'adresse correspondant à la donnée contenue dans l'étage du registre 13 qui est la plus proche de l'entrée tandis qu'un registre tampon 26 relié en sortie du compteur 8, mémorise l'adresse précédente.

Simultanément le dispositif de sécurité 2 compare les données qu'il reçoit via l'entrée D de l'objet avec la combinaison d'autorisation d'accès attribué à cet objet et il fournit le résultat sous forme d'un signal binaire de reconnaissance ou de non reconnaissance.

Le dispositif de sécurité 2 comporte classiquement une mémoire câblée 21 qui contient la combinaison d'autorisation d'accès et dont les sorties parallèles sont reliées à un premier groupe d'entrées d'un comparateur 22.

Le comparateur 22 possède un second groupe d'entrées qui est relié aux sorties parallèles d'un registre 23 de type entrée série-sorties parallèles dont l'entrée de donnée est reliée à l'entrée D de l'objet. Le comparateur 22 est contrôlé par l'horloge H via le circuit d'horloge 15 ainsi que le registre 23 de manière à ce que ce registre 23 conserve les éléments binaires qu'il reçoit au début opération, pour la durée de l'opération de reconnaissance au moins, ou éventuellement pour la durée pendant laquelle l'objet reste connecté au terminal.

Le comparateur 22 fournit un signal de reconnaissance de valeur un sur sa sortie $Q_1$ ou un signal de non reconnaissance de valeur un sur sa sortie $Q_2$, ces signaux étant figés pour la durée de l'opération ainsi qu'il a été énoncé plus haut. Dans l'exemple présent, la sortie $Q_1$ du comparateur 22 est reliée aux entrées de deux portes ET 24 et 25, la porte 24 possède une seconde entrée reliée à la sortie de la porte ET 18 et sa sortie est reliée à l'entrée de commande en écriture de la mémoire principale 1 qui est agencée de manière identique à la mémoire annexe 4 et ne sera donc pas décrite plus avant. La porte ET 24 assure donc la modification d'une donnée modifiable en mémoire principale lorsqu'il y a eu réussite de la tentative d'accès précédent la tentative en cours.

La porte 25 possède une seconde entrée reliée à la sortie de la porte ET 17 ainsi qu'une troisième entrée inversée reliée à la sortie de la porte 16; sa sortie est reliée à l'entrée de commande d'écriture en mémoire annexe 4 via une porte OU exclusive 28 et à l'entrée de commande d'un dispositif d'accès 27, constitué ici par des portes ET, telles 32 et 33, qui sont contrôlées par la porte 25. Le dispositif d'accès 27 relie les sorties parallèles de compteur 34 aux entrées de l'organe d'adressage 6, lorsque la tentative d'accès en cours succède à une ou des tentatives d'accès échouées. Il occasionne la modification de la donnée dont la valeur a été enregistrée dans l'étage du registre 13 qui est le plus proche de l'entrée de données de ce registre, laissant la donnée d'adresse immédiatement précédente non modifiée.

Les sorties des portes 17 et 18 sont également reliées aux entrées d'une porte OU exclusive 29 dont la sortie est reliée à l'une des deux entrées d'une porte ET30 dont une seconde entrée est reliée à la sortie $Q_2$ du comparateur 22 et une troisième entrée inversée est reliée à la sortie de la porte 16. Cette porte ET 30 est reliée par sa sortie à l'entrée de commande d'écriture en mémoire annexe 4, via la porte OU exclusive 28, et à l'entrée de commade d'un dispositif d'accès 31 identique au dispositif d'accès 27. Le dispositif d'accès 31 relie les sorties parallèles du registre tampon 26 aux entrées de l'organe d'adressage 6, lorsque le comparateur 22 produit un signal de non reconnaissance, il occasionne l'adressage de la donnée dont la valeur est enregistrée dans le second étage du registre 13 à partir de l'entrée de données, cette adresse étant alors enregistrée dans le registre tampon 26'.

Les signaux caractéristiques produits par les portes 16, 17, 18 sont transmis vers le terminal par une ou un ensemble de sorties S, S' qui permettant au terminal d'exécuter les opération prévues dans chaque cas.

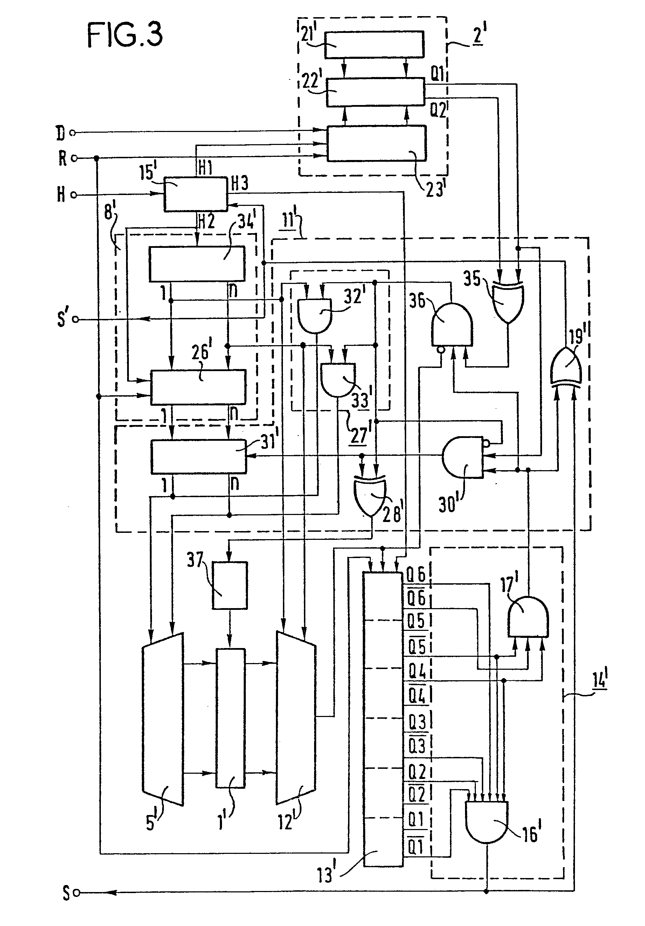

L'exemple de réalisation présenté figure 3 présente un certain nombre d'analogies avec l'exemple de la figure 2 et les éléments identiques ont été référencés par des chiffres identiques tels 2 et 2' pour les dispositifs de sécurité.

Selon cet exemple de réalisation les tentatives d'utilisation sont mémorisées en succession dans une seule mémoire de préférence référence ici 1'. Les moyens d'enregistrement 3' sont agencés pour mémoriser toute tentative d'utilisation par modification permanente de la donnée binaire qui suit en second la dernière donnée binaire modifiée et toute tentative réussie est mémorisée par modification supplémentaire de la donnée qui précède la donnée que l'on vient juste de modifier.

Ceci conduit donc à éliminer la mémoire annexe et à faire jouer son rôle par la mémoire 1'

et à modifier un certain nombre d'éléments de la figure 2 sans les transformer totalement; ainsi le registre 13' a un rôle équivalent à celui du registre 13, l'agencement de reconnaissance 14' a un rôle voisin de celui de l'agencement 14 et l'agencement logique 11' a même rôle que l'agencement 11.

De même manière qui précédemment toute tentative entraîne une lecture de la mémoire qui est ici la mémoire 1' de cette lecture s'arrête:

— si la porte ET 16' détecte l'apparition dans le registre 13' d'un nombre de tentatives échouées qui est égal au nombre d'invalidation, qui est de trois dans l'exemple présenté figure 3, chaque tentative échouée étant représentée par une combinaison 01, l'ensemble se traduisant par $\overline{Q}_1 Q_2 \overline{Q}_3 Q_4 \overline{Q}_5 Q_6$;
— si la porte ET 17' détecte une combinaison 100 se traduisant par $Q_4 \overline{Q}_5 \overline{Q}_6$ et indiquant la dernière donnée modifiée ($Q_4$) et les données à modifier pour la tentative en cours, les adresses de ces données à modifier étant contenues dans le compteur 34' et dans le registre tampon.

De même que précédemment la porte OU exclusive 19' est activée par le signal d'invalidation issue de la porte 16' ou par le signal de reconnaissance issu de la porte 17'. Le signal issu de la porte 19' est transmis au circuit d'horloge 15', dans l'un et l'autre des deux cas évoqués il bloque le compteur 34', le registre tampon 26' et le registre 13' dans leurs états respectifs.

L'organe logique 11' comprend 2 portes ET 30' et 36 et 2 portes OU exclusives 28' et 35 outre la porte 19' afin d'assurer la commande en écriture de mémoire 1.

La porte 35 est reliée au deux sorties du comparateur 22' pour fournir un signal d'activation à la porte Et 36 dès la fin d'une comparaison. La porte ET 36 reçoit le signal d'activation dès détection de l'emplacement de la dernière donnée mémorisée en mémoire 1' et un signal d'autorisation du dispositif de lecture 12', via une entrée inversée, ce signal indiquant que la donnée adressée en lecture par le compteur 34' n'a pas été modifiée, —sa valeur est confirmée par $\overline{Q}6$.

La porte ET 36, via le dispositif d'accès 27', commande l'adressage en écriture de cette donnée non modifiée, qui est disposée en second derrière la dernière donnée modifiée de la succession, dont la valeur est donnée par $Q_4$.

La porte ET 36 commande également l'écriture en mémoire 1' via un dispositif de temporisation 37, cette écriture s'effectuant à l'adresse précisée ci-dessus.

En fin d'écriture le dispositif de lecture 12 indique la modification de la donnée à modifier, ceci bloque la porte ET 36 et active la porte ET 30' qui reçoit un signal inversé de la porte ET 36, déclenchée par le dispositif de lecture 12, un signal issu de la porte ET 17' et le signal de reconnaissance $Q_2$ dans la mesure où le comparateur 22' a vérifié que la combinaison introduite dans l'objet pour cette tentative est égale à la combinaison mémorisée.

La porte ET 30' commande l'adressage en écriture de la donnée qui précède la donnée que l'on vient de modifier en activant le dispositif d'accès 31', celui-ci relie le registre tampon 26', contenant l'adresse désirée, à l'organe d'adressage 5'.

La porte ET 30' commande également l'écriture en mémoire 1' à l'adresse indiquée par le registre tampon 31', cette commande s'effectuant via la porte OU exclusive 28' de même que pour la commande par la porte ET 36.

On remarquera que l'objet selon l'invention ne permet pas à un éventuel fraudeur de savoir, avant inscription au cours d'une tentative, si la tentative sera enregistrée réussie ou échouée, en effet:

— dans la première réalisation selon la figure 2 le temps de prise de décision est identique quel que soit le succès de la tentative et il se traduit identiquement par une inscription unique.
— dans la seconde réalisation selon la figure 3 toute interruption en cours de tentative soit ne fournit aucune indication, soit se traduit par une inscription qui correspondra à une tentative échouée si elle n'est pas poursuivie.

On notera aussi que d'autres informations complémentaires peuvent être fournies à l'utilisateur, telle l'indication dernier essai possible et que d'autres éléments non décrits ici viennent normalement compléter ce type d'objet, ceci n'a pas été décrit plus avant, dans la mesure où les procédés et agencements nécessaires sont connus et n'entrent pas directement dans le cadre de l'invention.

**Revendications**

1. Objet portatif individualisé du genre carte de crédit dont l'utilisation implique la mise en oeuvre d'une combinaison d'autorisation qui doit être fournie, à chaque utilisation, à un dispositif de sécurité (2) apte à différencier la combinaison d'autorisation de toute autre combinaison de données binaires reçue pour permettre, tant que l'objet n'est pas invalidé, l'accès à une mémoire principale (1) via un circuit d'enregistrement (3) contrôlé par l'intermédiaire d'un circuit de détermination (9) en fonction du contenu d'une mémoire annexe (4) dans laquelle le circuit d'enregistrement (3) inscrit, par modification irréversible de données binaires successives, les tentatives dites échouées réalisées à l'aide de combinaisons erronées de manière à invalider l'objet à partir d'un nombre donné de tentatives échouées, le circuit d'enregistrement (3) comportant notamment un agencement logique (11) pour commander des modifications de données en mémoire principale (1) et mémoire annexe (4) en fonction des signaux fournis par le circuit de détermination (9) et le dispositif de sécurité (2) en sortie desquels cet agencement logique (11) est relié, ledit objet étant caractérisé en ce que l'agencement logique (11) est relié par deux liaisons au circuit de détermination (9) dont il reçoit à chaque tentative, tour à tour, par l'une un signal binaire caractéristique de l'échec de la tentative précédente, ou par l'autre un signal binaire caractéristique de la réussite de la tentative précédente, en ce qu'il fournit en conséquence à chaque tentative tant que l'objet n'est pas invalidé, un ordre de modification de donnée en mémoire annexe (4) pour la donnée qui suit la dernière donnée modifiée, si le dispositif de sécurité (2) et le circuit de détermination (9) indiquent par leurs signaux binaires respectifs l'échec de la présente tentative, ou pour la donnée qui suit en second la dernière donnée modifiée, si alternativement le dispositif de sécurité (2) indique la réussite de la présente tentative alors que le circuit de détermination (9) indique l'échec de la précédente et en ce que le circuit de détermination (9) comporte un agencement de reconnaissance (14), à trois organes logiques (16, 17, 18), relié à la mémoire annexe (4) et apte à y détecter respectivement une succession ininterrompue d'au moins quatre données binaires modifiées à l'aide du premier organe (16), une succession de deux données binaires modifiées et de deux données binaires non modifiées à l'aide du second organe (17) et une succession d'une donnée binaire non modifiée, d'une donnée binaire modifiée et de deux données binaires non modifiées, à l'aide du troisième organe (18) pour fournir respectivement le signal binaire d'invalidation ou l'un des signaux binaires caractéristiques de l'échec ou de la réussite de la tentative précédente.

2. Objet portatif selon la revendication 1, caractérisé en ce que le circuit de détermination (9) comporte un registre série-parallèle (13) à au moins quatre étages inséré entre la mémoire annexe (4) et les trois organes logiques (16, 17, 18) de l'agencement de reconnaissance (14) les sorties parallèles dudit registre (13) étant relié sélectivement aux entrées des trois organes logiques (16, 17, 18) de façon à permettre l'identification exclusive de l'une ou l'autre des successions correspondant respectivement au signal d'invalidation, au signal caractéristique d'échec ou au signal caractéristique de réussite.

3. Objet portatif selon la revendication 1, caractérisé en ce que la mémoire annexe (4) comporte une succession de données binaires modifiables de façon irréversible dont la seconde donnée est modifiée dès l'origine préalablement à toute utilisation de l'objet.

4. Objet portatif selon la revendication 2, caractérisé en ce qu'il comporte un agencement de sélection (8) d'adresse de donnée à modifier en mémoire annexe (4), composé d'un compteur synchrone multiétagé (34) dont les sorties parallèles sont reliées aux entrées d'adressage en lecture de la mémoire annexe (4) via un premier dispositif d'accès (27), ce compteur (34) ayant un entrée d'horloge accessible de l'extérieur de l'objet, ainsi qu'un registre tampon (26) dont les entrées parallèles sont reliées aux sorties du compteur (34) et dont les sorties sont reliées aux entrées d'adressage en écriture de la mémoire annexe (4) via un second dispositif d'accès (31).

5. Objet portatif individualisé du genre carte de crédit dont l'utilisation implique la mise en oeuvre d'une combinaison d'autorisation qui doit être fournie, à chaque utilisation, à un dispositif de sécurité (2) apte à différencier la combinaison d'autorisation de toute autre combinaison de données binaires reçue pour permettre, tant que l'objet n'est pas invalidé, l'accès à une mémoire (1') via un circuit d'enregistrement (5', 8', 11') contrôlé par l'intermédiaire d'un circuit de détermination (13', 14') en fonction de données successivement mémorisées de manière irréversible et distinctive dans la mémoire (1') au fur et à mesure des tentatives d'utilisation suivant la réussite ou l'échec de ses tentatives dues respectivement à l'emploi ou non de la bonne combinaison d'autorisation, le circuit d'enregistrement comportant notamment un agencement logique (11') pour commander les modifications irréversibles des données mémorisées en fonction des signaux fournis par le circuit de détermination et le dispositif de sécurité en sortie desquels cet agencement logique est relié, ledit objet étant caractérisé en ce que le circuit de détermination (13', 14') comporte un registre (13') dont le nombre d'étages est double du nombre de tentatives successives échouées entraînant l'invalidation de l'objet et qui connecté en sortie de mémoire (1') ainsi qu'un agencement de reconnaissance (14') à deux organes logiques (16', 17') connectés sélectivement à des sorties parallèles des étages du registre (13') et aptes à détecter respectivement une succession ininterrompue données binaires alternativement modifiées et non modifiées en nombre total égal à celui des étages du registre (13') à l'aide du premier organe logique (16') et une succession d'une donnée modifiée et de deux données non modifiées à l'aide du second organe logique (17').

6. Objet portatif selon la revendication 5, caractérisé en ce que le circuit d'enregistrement (5', 8', 11') comporte un agencement logique (11') relié aux sorties des deux organes logiques (16' 17') de l'agencement de reconnaissance (14') et du dispositif de sécurité (2') pour fournir à destination de la mémoire (1') un ordre de modification de la seconde donnée qui suit la dernière donnée modifiée à chaque tentative en l'absence de signal d'invalidation en sortie d'organe logique (16') et éventuellement un ordre de modification de la donnée intercalée entre ladite seconde donnée qui vient d'être modifiée et la donnée qui était auparavant la dernière donnée modifiée.

7. Objet portatif selon la revendication 6, caractérisé en ce qu'il comporte un agencement de sélection d'adresse (8') de mémoire (1') qui est relié à l'agencement logique (11) et aux entrées d'adressage de la mémoire (1'), qui comporte un compteur synchrone multiétagé (15') dont les sorties parallèles sont reliées aux entrées d'adressage (12') en lecture de la mémoire (1') et via un premier dispositif d'accès (27') aux entrées d'adressage en écriture (5') de cette mémoire (1') et qui en dernier lieu comporte un registre tampon (26') dont les entrées parallèles sont reliées aux sorties du compteur (15') et dont les sorties sont reliées aux entrées d'adressage en écriture (5') de la mémoire (1') via un second dispositif d'accès (31') fonctionnant à l'inverse du premier, pour permettre les lectures des données de la mémoire (1') et les écritures de données par une ou deux à chaque tentative en fonction de l'échec ou du succès de cette tentative.

**Patentansprüche**

1. Tragbarer individualisierter Gegenstand nach Art einer Kreditkarte, dessen Gebrauch die Anwendung eines Autorisierkodes einschließt, der bei jedem Gebrauch an eine Sicherheitsvorrichtung geliefert werden muß, welche den Autorisierkode von jeder anderen empfangenen Binärdatenkombination unterscheiden kann, um, solange der Gegenstand nicht ungültig gemacht ist, den Zugang zu einem Hauptspeicher (1) über einen Registrierkreis (3) zu ermöglichen, der über einen Bestimmungskreis (9) in Abhängigkeit vom Inhalt eines Nebenspeichers (4) gesteuert wird, in den der Registrierkreis (3) durch irreversible Modifikation von aufeinanderfolgenden Binärdaten die sogenannten erfolglosen Versuche einschreibt, die mithilfe falscher Kodes durchgeführt werden, um den Gegenstand nach einer vorgegebenen Zahl vergeblicher Versuche ungültig zu machen, wobei der Registrierkreis (3) insbesondere eine logische Einrichtung (11) aufweist, um Veränderungen an Daten im Hauptspeicher (1) und Nebenspeicher (4) in Abhängigkeit von vom Bestimmungskreis (9) und der Sicherheitsvorrichtung (2) gelieferten Signalen zu steuern, an deren Ausgänge diese logische Einrichtung (11) angeschlossen ist, dadurch gekennzeichnet, daß die logische Einrichtung (11) über zwei Verbindungen mit dem Bestimmungskreis (9) verbunden ist, von dem sie bei jedem Versuch abwechselnd über die eine Verbindung ein für das Mißlingen des vorhergehenden Versuchs kennzeichnendes Binärsignal oder über die andere Verbindung ein für den Erfolg des vorhergehenden Versuchs kennzeichnendes Binärsignal zugeführt erhält, und daß sie daraufhin nach jedem Versuch, solange der Gegenstand nicht ungültig erklärt ist, einen Datenänderungsbefehl im Nebenspeicher (4) entweder für die Information, die auf die letzte geänderte Information folgt, wenn die Sicherheitsvorrichtung (2) und der Bestimmungskreis (9) durch ihre jeweiligen Binärsignale das Mißlingen des vorliegenden Versuchs angeben, oder für die Information liefert, die als zweite auf die letzte geänderte Information folgt, wenn stattdessen die Sicherheitsvorrichtung (2) den Erfolg des vorliegenden Versuchs angibt, während der Bestimmungskreis (9) das Mißlingen des vorhergehenden Versuchs angibt, und daß der Bestimmungskreis (9) eine Erkennungseinrichtung (14) mit drei logischen Organen (16, 17, 18) aufweist, die mit dem Nebenspeicher (4) verbunden ist und dort jeweils eine ununterbrochene Folge von mindestens vier geänderten Binärinformationen mithilfe des ersten Organs (16), eine Folge von zwei geänderten Binärinformationen und zwei nicht geänderten Informationen mithilfe des zweiten Organs (17) und eine Folge einer nicht geänderten Binärinformation, einer geänderten Binärinformation und zweier nicht geänderter Binärinformationen mithilfe des dritten Organs (18) erkennen kann, um entweder das Ungültigkeits-Binärsignal oder eines der Binärsignale, die für das Mißlingen oder den Erfolg des vorhergehenden Versuchs charakteristisch sind, zu liefern.

2. Tragerbarer Gegenstand nach Anspruch 1, dadurch gekennzeichnet, daß der Bestimmungskreis (9) ein Serien-Parallel-Register (13) mit mindestens vier Stufen aufweist, das zwischen den Nebenspeicher (4) und die drei logischen Organe (16, 17, 18) der Erkennungseinrichtung (14) eingefügt ist, wobei die parallelen Ausgänge des Registers (13) selektive mit den Eingängen der drei logischen Organe (16, 17, 18) verbunden sind, um die exklusive identifizierung einer oder der anderen Folge zu ermöglichen, die jeweils dem Ungültigkeitssignal, dem charackteristischen Mißerfolgsignal oder dem charackteristischen Erfolgssignal entsprechen.

3. Tragerbarer Gegenstand nach Anspruch 1, dadurch gekennzeichnet, daß der Nebenspeicher (4) eine Folge von irreversibel veränderbaren Binärinformationen enthält, von denen die zweite Information von Anfang an, d.h. vor jedem Gebrauch des Gegenstands, verändert wird.

4. Tragbarer Gegenstand nach Anspruch 2, dadurch gekennzeichnet, daß er eine Auswahleinrichtung (8) für die zu ändernde Informationsadresse im Nebenspeicher (4) aufweist, die aus einem vielstufigen Synchronzähler (34) besteht, dessen parallele Ausgänge mit den Lese-Adressiereingängen des Nebenspeichers (4) üner eine erste Zugriffsvorrichtung (27) verbunden sind, wobei dieser Zahler (34) einen Takteingang besitzt, der von außerhalb des Gegenstands zugänglich ist, sowie aus einem Pufferregister (26), dessen parallele Eingänge mit den Ausgängen des Zählers (34) verbunden sind und dessen Ausgänge mit den Schreib-Adressiereingängen des Nebenspeichers (4) über eine zweite Zugriffsvorrichtung (31) verbunden sind.

5. Tragbarer individualisierter Gegenstand nach Art einer Kreditkarte, für dessen Gebrauch die Verwendung eines Autorisierkodes notwendig ist, der bie jedem Gebrauch an eine Sicherheitsvorrichtung (2) geliefert werden muß, welche den Autorisierkode von jeder anderen empfangenen Binärdatenkombination unterscheiden kann, um, solange der Gegenstand nicht ungültig gemacht ist, den Zugang zu einem Speicher (1') über einen Registrierkreis (5', 8', 11') zu ermöglichen, der über einen Bestimmungskreis (13′ 14′) in Abhängigkeit von in irreversibler und unterscheidungskräftiger Weise nacheinander im Speicher (1′) gespeicherten Daten ge- steuert wird, entsprechend den Benutzungs- versuchen gemäß dem Erfolg oder dem Mißlingen dieser Versuche, die dem richtigen oder falschen Gebrauch des richtigen Autorisierkodes entsprechen, wobei der Registrierkreis insbesondere eine logische Einrichtung (11′) zum Steuern der irreversiblen Änderungen der gespeicherten Daten in Abhängigkeit von den vom Bestimmungskreis und der Sicherheitsvorrichtung gelieferten Signalen, an deren Ausgänge diese logische Einrichtung angeschlossen ist, dadurch gekennzeichnet, daß der Bestimmungskreis (13′, 14′) ein Register (13′) aufweist, dessen Stufenzahl doppelt so groß wie die Anzahl von aufeinanderfolgenden mißlungenen Versuchen ist, die die Ungültigkeit des Gegenstands nach sich zieht, und das an den Speicherausgang (1′) angeschlossen ist, sowie eine Erkennungseinrichtung (14′) mit zwei logischen Organen (16′, 17′) aufweist, die selektiv mit parallelen Ausgängen der Stufen des Registers (13′) verbunden sind und eine ununterbrochene Folge von Binärinformationen, die abwechselnd geändert und nicht geändert sind, und deren Gesamtzahl der der Stufen des Registers (13′) entspricht, mithilfe des ersten Organs (16′) bzw. eine Folge einer geänderten Information und zweier nicht geänderter Informationen mithilfe des zweiten logischen Organs (17′) aufspüren können.

6. Tragbarer Gegenstand nach Anspruch 5, dadurch gekennzeichnet, daß der Registrierkreis (5′, 8′, 11′) eine logische Einrichtung (11′) aufweist, die mit den Ausgängen der beiden logischen Organe (16′, 17′) der Erkennungseinrichtung (14′) und der Sicherheitsvorrichtung (2′) verbunden sind, um dem Speicher (1′) einen Änderungsbefehl für die zweite Information, die auf die letzte geänderte Information jedes Versuchs in Abwesenheit eines Ungültigkeitssignals am Ausgangs des logischen Organs (16′) und eventuell einen Äderungsbefehl zu liefern, der zwischen die genannte zweite, soeben geänderte Information und die Information geschoben ist, die vorher die letzte geänderte Information war.

7. Tragbarer Gegenstand nach Anspruch 6, dadurch gekennzeichnet, daß er eine Adressenauswahl-Einrichtung (8′) für den Speicher (1′) aufweist, die mit der logischen Einrichtung (11) und den Adressiereingängen des Speichers (1′) verbunden ist, einen synchronen Vielstufen-Zähler (15′) aufweist, dessen parallele Ausgänge mit den Lese-Adressiereingängen (12′) des Speichers (1′) und über eine erste Zugriffsvorrichtung (27′) mit den Schreib-Adressiereingängen (5′) dieses Speichers (1′) verbunden sind, und die schließlich noch ein Pufferregister (26′) aufweist, dessen parallele Eingänge mit den Ausgängen des Zählers (15′) verbunden sind und dessen Ausgänge mit den Schreib-Adressiereingängen (5′) des Speichers (1′) über eine zweite Zugriffsvorrichtung (31′) verbunden sind, die umgekehrt zur ersten funktioniert, um das Lesen der Informationen des Speichchers (1′) und das Schreiben der Informationen einzeln oder zu zweit bei jedem Versuch in Abhängigkeit vom Mißerfolg oder Erfolg dieses Versuchs zu ermöglichen.

**Claims**

1. An individualized portable object of the credit card type, the utilization of which requires the application of an authorization code which must be supplied, for each utilization, to a security device (2) able to distinguish the authorization code from any other received combination of binary data for permitting, as long as the object is not invalidated, the access to a main memory (1) via a registering circuit (3) controlled by a determination circuit (6) in accordance with the contents of a secondary memory (4) into which the registering circuit (3) inscribes, by irreversible modification of successive binary data, the attempts called failed because they are carried out with a wrong combination, so as to invalidate the object after a given number of failed attempts, the registering circuit (3) comprising in particular a logic unit (11) for initiating modifications of data in the main memory (1) and in the secondary memory (4) in accordance with signals supplied by the determination circuit (9) and the security device (2) to the outputs of which this logic unit (11) is connected, characterized in that the logic unit (11) is connected by two links to the determination circuit (9) from which it receives at each attempt, through one link a binary signal which is characteristic for the failing of the preceding attempt, or through the other link a binary signal which is characteristic for the success of the preceding attempt, in that, after each attempt as long as the object is not invalidated, it consequently supplies a command of modification of data in the secondary memory (4) either for the data which follows the most recently modified data, if the security device (2) and the determination circuit (9) indicate by their respective binary signals the failing of the present attempt, or for the data which follows in the second place after the most recently modified data, if alternatingly the security device (2) indicates the success of the present attempt, whereas the determination circuit (9) indicates the failing of the preceding attempt, and in that the determination circuit (9) comprises a recognition means (14) with three logic members (16, 17, 18) connected to the secondary memory (4) and able to detect in the latter an uninterrupted succession of at least four modified binary data by means of the first member (16), a succession of two modified binary data and two unmodified binary data by means of the second member (17) and a succession of one unmodified binary data, a modified binary data and two unmodified binary data by means of the third member (18) respectively, for supplying the binary invalidation signal or one of the binary signals respectively which are characteristic for the failing or the success of the preceding attempt.

2. A portable object according to claim 1, characterized in that the determination circuit (9) comprises a series-parallel register (13) with at least four stages inserted between the secondary memory (4) and the three logic members (16, 17, 18) of the recognition means (14), the parallel outputs of said register (13) being selectively connected to the inputs of the three logic members (16, 17, 18) so as to permit the exclusive identification of one or the other of the succession corresponding to the invalidation signal, to the characteristic signal of failure or to the characteristic signal of success respectively.

3. A portable object according to claim 1, characterized in that the secondary memory (4) comprises a succession of irreversibly modifiable binary data, the second data of which is modified prior to any utilization of the object.

4. A portable object according to claim 2, characterized in that it comprises a selection means (8) for the data address to be modified in the secondary memory (4), composed of a multi-stage synchronous counter (34), the parallel outputs of which are connected to the read address inputs of the secondary memory (4) via a first access device (27), this counter (34) having a clock entry which is accessible from outside the object, and of a buffer register (26), the parallel inputs of which are connected to the outputs of the counter (34) and the outputs of which are connected to the write address inputs of the secondary memory (4) via a second access device (31).

5. A portable individualized object of the credit card type, the utilization of which requires the application of an authorization code which must be supplied, for each utilization, to a security device (2) able to distinguish the authorization code from any other received combination of binary data for permitting, as long as the object is not invalidated, the access to a memory (1') via a registering circuit (5', 8', 11') controlled by a determination circuit (13', 14') in accordance with data which are successively memorized in an irreversible and distinctive manner in the memory (1') during the utilization attempts according to the success or the failure of its attempts due to the use or not respectively of the right authorization code, the registering circuit comprising in particular a logic means (11') for commanding the irreversible modifications of the stored data in accordance with the signals supplied by the determination circuit and the security device to the outputs of which this logic means is connected, characterized in that the determination circuit (13', 14') comprises a register (13') the number of stages of which is the double of the number of successive failed attempts resulting in the invalidation of the object and which is connected to the output of the memory (1'), as well as a recognition means (14') with two logic members (16', 17') selectively connected to parallel outputs of the stages of the register (13') and able to detect by means of the first logic member (16') an uninterrupted succession of binary data which are alternatingly modified and unmodified, the total number of data being equal to that of the stages of the register (13'), and by means of the second logic member (17') respectively a succession of one modified data and two unmodified data.

6. A portable object according to claim 5, characterized in that the registering circuit (5', 8', 11') comprises a logic means (11') connected to the outputs of the two logic members (16', 17') of the recognition means (14') and the security device (2') for supplying to the memory (1') a modification command of the second data which follows the last modified data at each attempt in the absence of the invalidation signal at the output of the logic member (16'), and maybe a modification command of the data intercalated between said second data which has just been modified and the data which had before been the most recently modified data.

7. A portable object according to claim 6, characterized in that it comprises an address selection means (8') of the memory (1') which is connected to the logic means (11) and to the address inputs of the memory (1'), which selection means (8') comprises a multi-stage synchronous counter (15') the parallel outputs of which are connected to the read address inputs (12') of the memory (1') and via a first access device (27') to the write address inputs (5') of this memory (1') and which means finally comprises a buffer register (26'), the parallel inputs of which are connected to the outputs of the counter (15') and the outputs of which are connected to the write address inputs (5') of the memory (1') via a second access device (31') operating inversely to the first, for permitting the reading of the data from the memory (1') and the writing of data by one or two at each attempt in accordance with the failure or the success of this attempt.

# FIG.1

# FIG. 2

# FIG.3